(19) Europäisches Patentamt
European Patent Office
Office européen des brevets

(11) Publication number: 0 195 407 B1

(12) EUROPEAN PATENT SPECIFICATION

(45) Date of publication of patent specification: 07.11.90

(51) Int. Cl.[5]: C 03 B 37/014

(21) Application number: 86103629.1

(22) Date of filing: 18.03.86

# (54) Method for producing glass preform for optical fiber.

(30) Priority: 18.03.85 JP 52180/85
03.10.85 JP 219090/85

(43) Date of publication of application:
24.09.86 Bulletin 86/39

(45) Publication of the grant of the patent:
07.11.90 Bulletin 90/45

(84) Designated Contracting States:
DE FR GB NL

(56) References cited:
EP-A-0 140 651
GB-A-2 023 130
US-A-3 868 170
US-A-4 125 388

PATENTS ABSTRACTS OF JAPAN, vol. 4, no. 106 (C-20)588r, 30th July 1980, page 91 C 20; & JP - A - 55 67 533 (NIPPON DENSHIN DENWA KOSHA) 21-05-1980

(73) Proprietor: SUMITOMO ELECTRIC INDUSTRIES LIMITED
No. 15, Kitahama 5-chome Higashi-ku
Osaka-shi Osaka 541 (JP)

(72) Inventor: Kyoto, Michihisa c/o Yokohama Works
Sumitomo Electric Ind. Ltd. 1, Taya-cho
Totsuka-ku Yokohama-shi Kanagawa (JP)
Inventor: Ishiguro, Yoichi c/o Yokohama Works
Sumitomo Electric Ind. Ltd. 1, Taya-cho
Totsuka-ku Yokohama-shi Kanagawa (JP)
Inventor: Urano, Akira c/o Yokohama Works
Sumitomo Electric Ind. Ltd. 1, Taya-cho
Totsuka-ku Yokohama-shi Kanagawa (JP)
Inventor: Kakuzen, Hideo c/o Yokohama Works
Sumitomo Electric Ind. Ltd. 1, Taya-cho
Totsuka-ku Yokohama-shi Kanagawa (JP)

(74) Representative: Lehn, Werner, Dipl.-Ing. et al
Hoffmann, Eitle & Partner Patentanwälte
Arabellastrasse 4
D-8000 München 81 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 195 407 B1

**Description**

Field of the Invention

The present invention relates to a method for producing a glass preform for use in the fabrication of an optical fiber. More particularly, it relates to a method for producing a glass preform for use in the fabrication of an optical fiber a core of which contains fluorine for adjusting a refractive index of the glass.

Background of the Invention

A glass preform for use in the fabrication of an optical fiber is produced by various methods. Among them, the VAD method and OVD method are attractive methods since the productivity and quality of the optical fiber fabricated are better than other methods. These methods comprise synthesizing glass soot particles by flame hydrolysis of a glass-forming raw material and depositing the soot particles on a rotating seed material to form a porous soot preform. Then, the porous soot preform is heated in a suitable atmosphere to dehydrate and vitrify it so as to produce a transparent glass preform, which is drawn to fabricate an optical fiber.

The optical fiber comprises a core through which light is propagated and a cladding which surrounds the core and reflects light to be propagated. The numerical aperture (hereinafter referred to as "N.A.") is calculated from the average refractive indexes $n_1$ and $n_2$ of the core and the cladding as follows:

$$N.A. = \sqrt{n_1^2 - n_2^2}\ (n_1 > n_2).$$

It is understood that the difference of the refractive index between the core and the cladding is made large to obtain large N.A. For this end, one of following measures is taken in case of a silica ($SiO_2$) glass type optical fiber:

1) In the core, an additive for increasing its refractive index is added.
2) In the cladding, an additive for lowering its refractive index is added.
3) Combination of the measures 1 and 2.

Needless to say, the cladding in the case 1 and the core in the case 2 are made of silica glass.

Usually, $GeO_2$, $P_2O_5$, $Al_2O_3$ and $TiO_2$ are used to increase the refractive index of silica glass, and $B_2O_3$ and fluorine are used to lower the refractive index of silica glass. Fig. 1 shows variation of the refractive index of silica glass added with the various additives for light with a wavelength of 0.59 μm (cf. Kumamaru and Kurosaki, "Light Transmission Materials" in the Industrial Materials (Kogyozairyo), *27* (1979) 39).

Among the additives, recently, fluorine increasingly attracts the skilled persons in this field and being studied to use it as an additive in the VAD method and the like.

To achieve the same difference of refractive index between the core and the cladding of the optical fiber, the measure 2 or 3 is preferred since no additive is added to the core, or a smaller amount of the additive is added to the core than in the measure 1. This is advantageous for a high N.A. optical fiber since attenuation of light transmission due to the presence of the additive is decreased. In addition, an optical fiber having good performance in the presence of radiation can be produced only by the measure 2. Therefore, it is greatly advantageous to add the additive to the cladding to lower its refractive index.

In the VAD method, fluorine is added in a sintering step, namely a vitrifying step of the soot preform. This has following advantages:

1. Fluorine is homogeneously added to achieve uniform distribution of the refractive index, and
2. An adding rate of fluorine is high. Namely, several hundreds to a thousand grams of the porous soot preform can be treated and vitrified within several hours.

In the conventional methods, the soot preform is heated under pressure not lower than atmospheric pressure in an atmosphere of a gaseous fluorine-containing compound which is optionally diluted with an inert gas to add fluorine to the preform. However, according to the conventional method, undersirably bubbles tend to remain in the glass preform. Particularly in the VAD method, when fluorine is to be added in an amount corresponding to −0.5% of the refractive index difference, the bubbles easily remains in the glass. The amount of the bubbles increases as the added amount of fluorine increases.

Further, when the inert gas is used to dilute the fluorine-containing compound, any inert gas except helium, for example, nitrogen, argon or oxygen always forms bubbles in the glass preform. Helium sometimes forms bubbles in the glass preform. Although helium is a preferable diluting gas, it is expensive and increases production cost of the optical fiber.

The reason why the bubbles are formed in the glass preform may be as follows:

When the soot preform is heated in the atmosphere comprising the fluorine-containing compound under pressure not lower than atmospheric pressure, gas trapped by the glass soot particles can not be removed and forms bubbles in the vitrified preform.

In case where the soot preform is heated in the inert gas such as nitrogen before fluorine is added, the inert gas may be contained in gaps in the soot particles. Therefore, if the soot preform is heated under pressure not lower than atmospheric pressure, the inert gas cannot be dissipated from the surface of the soot preform so that a gaseous mixture of the inert gas and the fluorine-containing compound is present in the soot preform. Thus, the concentration of the fluorine-containing compound in the soot preform is lower than that in the atmosphere, particularly when a bulk density of the soot preform is 0.4 g/cm³ or larger. As

the result, the fluorine may not be added to the glass in a desired amount, or it may takes longer time to add a sufficient amount of fluorine to the glass.

The fluorine-containing compound penetrates in the soot preform through minute spaces in it and then the inert gas is exhausted from the preform. Therefore, replacement of the gas in the preform takes much longer time.

The nearest prior art may be comprised by JP—A—55 67 533 (A) which describes a method for producing a glass-based material for light transmission and in which a fluorine compound such as fluorocarbon gas is introduced into a high temperature furnace in which glass fine particles on the outside of a starting material, which are formed by flame hydrolysis, are heat treated. Furthermore, US—A—3 868 170 discloses a method of removing entrapped gas from glass preforms. A layer of glass soot is applied to a starting member to form a porous body and the porous body is then placed in a controlled environment in which a predetermined desired concentration of gases is maintained and thereafter the porous body is heated below the sintering temperature of the glass to permit entrapped gas to escape therefrom and the temperature is maintained until a equilibrium is reached between the partial pressure of the entrapped gas in the porous body and the partial pressure of the same gas in said environment. Thereafter, the porous body is further heated to at least the sintering temperature of the glass to sinter the soot particles.

One object of the present invention is to provide a method for producing a glass preform having fewer or no bubble therein with increasing an amount of fluorine to be added to the glass preform.

Another object of the present invention is to provide a method for producing a glass preform from a soot preform at a high production rate.

Further object of the present invention is to provide a method for economically producing a glass preform.

The present invention comprises in a first embodiment a method for producing a fluorine-containing glass preform for use in the fabrication of an optical fiber wherein a glass soot preform formed from a glass-forming raw material is heated and vitrified, characterized by the following steps:

heating the soot preform under a reduced pressure of $50 \times 1.333$ mbar to $10^{-3} \times 1.333$ mbar (50 Torr to $10^{-3}$ Torr) at a temperature at which the soot preform is not vitrified,

heating the soot preform in an atmosphere comprising at least one fluorine-containing compound having a partial pressure from 0.01 to 0.5 bar at a pressure not lower than atmospheric pressure.

According to a second embodiment, the present invention comprises a method for producing a fluorine-containing glass preform for use in the fabrication of an optical fiber wherein a glass soot preform formed from a glass-forming raw material is heated and vitrified, characterized by the following steps:

heating the soot preform in an atmosphere comprising at least one fluorine-containing compound having a partial pressure from 0.01 to 0.5 bar at a reduced pressure for a sufficient time to add fluorine thereto, and vitrifying the fluorine added preform.

In the method of the present invention, the soot preform may be any glass soot preform produced by any one of conventional methods such as the sol-gel method, the VAD method or the CVD method.

Specific examples of the fluorine-containing compound are $SiF_4$, $SF_6$, $CF_4$, $C_2F_6$, $C_3F_8$, $CCl_2F_2$ and $COF_2$ as well as their mixtures. Among them $SiF_4$ is preferred. When $SiF_4$ is used as the fluorine-containing compound, the reaction between the quartz glass and $SiF_4$ may proceed as follows:

$$3SiO_2\ (s) + SiF_4\ (g) \rightarrow 4SiO_{1.5}F\ (s)$$

wherein (s) and (g) stand for solid and gaseous states, respectively. Accordingly $CO_2$ and CO are not formed. When $SF_6$ or $CF_4$ is used, $SO_3$ or $CO_2$ may be generated according to the following reaction formulas and form bubbles:

$$SF_6\ (g) + 3/2SiO_2\ (s) \rightarrow 3/2SiF_4\ (g) + SO_3\ (g), \text{ or}$$

$$CF_4\ (g) + SiO_2\ (s) \rightarrow SiF_4\ (g) + CO_2\ (g).$$

Therefore, the fluorine-containing compounds including sulfure and/or carbon atoms are less preferred.

The fluorine-containing compound may be diluted with a diluent gas such as helium, argon and nitrogen.

The method according to the present invention is particularly advantageous for the soot preform having a bulk density of not smaller than 0.4 g/cm$^3$. As the bulk density of the soot preform increases, it becomes more difficult for the gaseous compound to pentetrate in the spaces in the preform or to replace the trapped gas therewith.

In the second embodiment, partial pressure of the fluorine-containing compound is from 0.01 to 0.5 atm. In addition, when fresh fluorine-containing compound is continuously added, the partial pressure can be controlled and impurities from the heating equipment are removed from the reaction area. In addition, the reaction rate can be kept high by the introduction of the fresh fluorine-containing compound. The reason for this may be assumed in the case of $SiF_4$ that a dissociation reaction according to following reaction formula could be suppressed:

$$SiF_4\ (g) \rightarrow SiF_2\ (g) + F_2\ (g).$$

When the porous soot preform produced by the VAD method is heated under reduced pressure in the presence of $SiF_4$, the relationship between the partial pressure (P) of $SiF_4$ and the difference of the refractive index ($\Delta n$) from that of pure silica is shown in Fig. 2. The relationship between the heating temperature (T°C) and $\Delta n$ is shown in Fig. 3. As the temperature is raised and the partial pressure of $SiF_4$ is increased, the difference of the refractive index is increased. Practically, when the partial pressure of $SiF_4$ is higher than 0.5 atm. or the temperature exceeds 1,400°C, the bubbles tend to form in the glass preform. The formation of bubbles is more seriously affected by the high partial pressure of $SiF_4$ than the high temperature.

Thus, the partial pressure of the fluorine-containing compound is from 0.01 to 0.5 bar. The temperature is preferably not lower than 800°C. At a lower temperature, the reaction does not effectively proceeds.

In the second embodiment, the soot preform is preferably dehydrated before the addition of fluorine, since fluorine is more effectively added to the dehydrated soot preform.

The first embodiment of the invention will be illustrated, by way of example, with reference to the accompanying drawings.

Fig. 4 shows one embodiment of an apparatus for carrying out the method of the invention. In Fig. 4, a soot preform 1 may be produced by a sol-gel method or a flame hydrolysis method such as the VAD or CVD method and is placed in a furnace 2 such as a sintering furnace. The furnace 2 is evacuated by a ventilating pump 3 connected to the furnace 2 through a valve 10. The fluorine-containing compound is introduced from an inlet 4 through a valve 5 by means of a compressor 6. The soot preform is attached at a lower end of a rod 7 made of, for example, glass or carbon, which can move up and down with rotation. A hole through which the rod is inserted in the furnace is sealed with a sealing member 8, which is resistant to pressure, reduced pressure and heat. The furnace 2 is heated with a heater 9 which generates heat by electric resistance heating or high frequency heating. Other gas such as nitrogen, chlorine, argon and helium may be introduced from an inlet 11 through a valve 12.

Firstly, the furnace 2 is filled with nitrogen gas and the soot preform 1 is inserted therein as shown in Fig. 4. Then, the nitrogen gas is evacuated to gradually reduce the interior pressure of the furnace 2. In this step, care should be taken so that the preform 1 is not present near the ventilation hole connected to the ventilating pump 3. Quick ventilation is not preferred since pressure difference is generated between the inside and periphery of the soot preform and deform the preform.

Under the reduced pressure, the soot preform 1 is heated by means of the heater 9. Thereby, the gas and water contained in the spaces of the soot preform are removed. In this step, the temperature is not so high as to vitrify the soot preform. Preferably, the temperature is not higher than 850°C, particularly from a room temperature to 700°C. According to the experiments by the inventors, even at a temperature of 70 to 80°C, the objects of the invention could be achieved.

The reduced pressure is $50 \times 1.333$ mbar to $10^{-3} \times 1.333$ mbar (50 Torr to $10^{-3}$ Torr). The lower the pressure, the better.

The trapped gas and/or water can be more effectively removed by carefully introducing gas such as chlorine, helium or argon to slightly increase the pressure and again lowering the pressure.

After removal of the trapped gas and/or water is completed, the fluorine-containing gas is introduced in the furnace 2 at a low flow rate from the inlet 4 through the valve 5 with controlling its flow rate. The introduction of the fluorine-containing compound at a high flow rate undesirably generates the pressure difference between the inside and periphery of the soot preform 1. At the beginning of the introduction of the fluorine-containing compound, the pressure in the furnace 2 is from $50 \times 1.333$ mbar to $10^{-3} \times 1.333$ mbar (50 Torr to $10^{-3}$ Torr). However, at the final stage of the addition of fluorine, the fluorine-containing gas may be introduced at a higher flow rate.

Now, the method is described with making reference to a case in which $SiF_4$ as the fluorine-containing compound is introduced at a pressure of $1.333 \cdot 10^{-2}$ mbar ($10^{-2}$ Torr) at the beginning and at atmospheric pressure at the end.

In this case, a small space $\Delta V$ in the soot preform is filled with $SiF_4$. Assuming that there is no gas except nitrogen and $SiF_4$ in the space $\Delta V$, at the end of the introduction of $SiF_4$, the partial pressure of nitrogen $1.333 \cdot 10^{-2}$ mbar ($10^{-2}$ Torr) and that of $SiF_4$ $1.33(760 - 10^{-2})$ bar ($760 - 10^{-2}$ Torr). Thus, the volume ratio of nitrogen to $SiF_4$ is calculated to be about 13 ppm according to the following equation:

$$\Delta V_0 N_2 / \Delta V_0 SiF_4 = 1/(760 \times 100) = 1.3 \times 10^{-5}.$$

On the contrary, if the pressure is not reduced and nitrogen gas trapped under a pressure slightly higher than 1 bar (atmospheric pressure) is to be replaced with $SiF_4$ pressurized to several bar, it can be easily understood that the replacement of nitrogen with $SiF_4$ is much worse than the above case. Assuming that $SiF_4$ is introduced at a pressure of 5 atm. and there is not temperature difference before and after the introduction, when the originally trapped gas is not removed, nitrogen is compressed in the small space $\Delta V$ from about 1 bar to 5 bar so as to balance the pressure of $SiF_4$. Therefore, the content of nitrogen gas in the mixed gas in the small space is calculated to be 20% as follows:

$$\Delta VN_2/(\Delta VSiF_4 + \Delta VN_2) = 1/5 = 2 \times 10^{-1}.$$

This content of 20% is much larger than that in the above case of 13 ppm.

According to the present invention, the trapped gas is removed so that the fluorine-containing compound is not diluted with the trapped gas.

After replacing the trapped gas with $SiF_4$, the soot preform is heated to a temperature of 800 to 1,400°C to activate $SiO_2$ so as to proceed the reaction of $SiO_2$ with $SiF_4$. The soot preform is sintered by raising the temperature up to 1,400°C with introducing an inter gas such as helium or argon to form a transparent glass preform.

Alternatively, the soot preform filled with $SiF_4$ is again evacuated to remove the gas therein so as to dehydrate it and then sintered. By this measure, the formation of bubbles, particularly micro-bubbles in the glass soot is more effectively suppressed.

Instead of the introduction of the gaseous fluorine-containing compound in the heating furnace, the soot preform is immersed in a liquid fluorine-containing compound contained in the furnace 2. Then, the furnace is heated to vaporize the compound so as to fill the spaces in the soot preform.

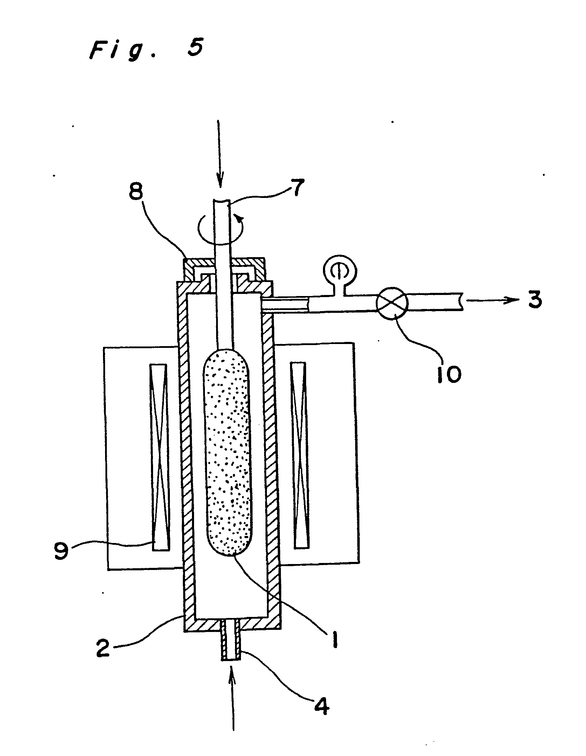

Fig. 5 shows an apparatus to be used for carrying out the second embodiment of the method according to the present invention. The same numerals stand for the same elements as in Fig. 4.

In the embodiment of the second embodiment, the glass-forming raw material such as $SiCl_4$ is flame hydrolyzed according to a conventional method, for example, the VAD method to form $SiO_2$ glass soot particles and depositing them on a substrate to produce a glass soot preform. The soot preform consists of uniform glass particles having a particle size under a submicron order and has a bulk density of 0.2 to 0.5 g/cm$^3$. Therefore, the soot preform is sufficiently porous. The glass soot preform may contain $GeO_2$ and/or $P_2O_5$.

The glass soot preform is placed in the apparatus as shown in Fig. 5 and kept at a temperature of about 800°C. When placing the preform in the apparatus, following care should be taken:

The pressure in the apparatus is reduced in an air tight condition, and the seal 8 should be tightly placed. The seal is preferably a carbon seal since it does not lose resiliency at a high temperature. Further, dust is prevented from adhering on the surface of the seal. When the sealing is insufficient, gas in the apparatus leaks, moisture penetrates into the apparatus to contaminate the interior of the apparatus. Thereby, dehydration of the soot preform becomes insufficient or the fluorine-containing compound reacts with moisture to form hydrogen fluoride which etches the soot preform.

The soot preform placed in the apparatus is dehydrated at a temperature of 800 to 900°C for 10 to 20 minutes. In this step, the atmosphere preferably comprises an inert gas such as nitrogen, argon and helium and its flow rate is preferably from 5 to 10 l/min. If the soot preform is heated to a temperature of 1,200 to 1,300°C immediately after it is placed in the apparatus, it often breaks. Therefore, such preheating is suitable for preventing the soot preform being dehydrated from breaking. Then, the soot preform is heated to a temperature of 800 to 1,100°C at a rate of 3 to 10°C/min. under pressure of 0.2 to 0.5 bar in an atmosphere of the inert gas containing 10 to 50% by mole of chlorine gas in order to completely dehydrate the soot preform. The time required to dehydrate the preform depends on its bulk density and it takes longer time as the bulk density increases. For example, when the bulk density is 0.25 g/cm$^3$, one hour is enough to dehydrate the soot preform.

Then, to an atmosphere of the inert gas and chlorine gas, a gaseous fluorine-containing compound, preferably $SiF_4$ is added with a partial pressure of 0.05 to 0.5 bar. Thereafter, the supply of the inert gas and chlorine gas is terminated and the pure gaseous fluorine-containing compound, is introduced in the apparatus at a flow rate of about 3 to 7 l/min., preferably about 5 l/min. The temperature is gradually raised to 1,400 to 1,600°C, preferably about 1,500°C, during the preform is rotated at a rate of 10 to 20 rpm. The rotation of the soot preform facilitates homogeneous heating of the soot preform. If the soot preform is not homogeneously heated, fluorine is not uniformly added and/or the glass preform is deformed. By this way, the soot preform is vitrified and added with fluorine.

When the heating means 9 has a relatively short length, it is preheated to the above desired temperature, and then the soot preform is introduced into the furnace 2 by lowering it at a constant rate of 2 to 4 mm/min.

The furnace 2 is preferably made of carbon, alumina or mullite. The inner surface of the furnace may be laminated with quartz glass. The heating means 9 can be made of carbon or silicon carbide.

Practical and presently preferred embodiment of the present invention are shown in the following examples.

## Example 1

The apparatus of Fig. 4 was used.

A pure silica soot preform a core of which had a bulk density of 0.4 g/cm$^3$ was placed in the furnace 2 and heated to 850°C with evacuating the furnace to $1.333 \cdot 10^{33}$ mbar ($10^{-3}$ Torr). Then, pure $SiF_4$ was introduced to 1 bar and the preform was heated to 1,400°C or higher.

$\Delta n$ of the fluoride-added glass preform was about $-1.0\%$.

From the preform, a cylindrical tube was made.

A composite of the produced tube as a cladding material and a pure quartz rod as a core material was drawn to fabricate an optical fiber having attenuation of light transmission of 2 dB/Km at a wavelength of 0.85 μm.

Comparative Example 1

In the same manner as in Example 1 but not evacuating the soot preform before the addition of fluorine, the glass preform was produced. Δn of the fluorine-added glass preform was −0.1% in the core portion and −1% at the peripheral portion.

Example 2

Around periphery of a rod made of quartz glass containing 17% by weight of $GeO_2$ had having a diameter of 10 mm, $SiO_2$ particles were deposited by flame hydrolysis of $SiCl_4$ in a thicknes of 60 mm to produce a soot preform.

The produced preform was treated in the same manner as in Example 1 to obtain a transparent glass preform. Then, the glass preform was drawn to fabricate an optical fiber having attenuation of light transmission of 2 dB/Km at a wavelength of 0.85 μm.

Example 3

A soot preform was produced in the same manner as in Example 2 but using a rod consisting of a core of pure quartz glass and a periphery of quartz glass added with 1% by weight of fluorine and having a diameter of 10 mm.

The soot preform was placed in the furnace 2 of Fig. 4 the inner wall of which was made of quartz, and heated to 1,000°C under pressure of 66.65 mbar (50 Torr) in an atmosphere of chlorine and helium in a volume ratio of 0.1 to 0.5 ($Cl_2$/He). Then, the pressure was reduced to $1.333 \cdot 10^{-2}$ mbar ($10^{-2}$ Torr) to dehydrate the soot preform. Thereafter, the soot preform was gradually heated from 1,000°C to 1,600°C with introducing helium gas at a rate of 2 l/min. from the inlet 11 and $SiF_4$ at a rate of 60 ml/min. from the inlet 5 to vitrify the preform.

The produced glass preform was transparent and had no bubbles therein. Fluorine was uniformly added at a concentration of 1% by weight.

An optical fiber fabricated from the glass preform had attenuation of light transmission of 0.4 dB/Km at a wavelength of 1.30 μm.

Example 4

The apparatus of Fig. 5 was used.

A pure quartz soot preform was heated at 1,200°C for 2 hours in an atmosphere of pure $SiF_4$ under pressure of 0.2 bar. After terminating supply of $SiF_4$, the soot preform was heated to 1,600°C in an atmosphere of helium under pressure of 0.05 bar to vitrify the preform. Δn of the glass preform was −0.5%.

From the produced preform, a cylindrical tube was made.

A composite of the tube of the produced preform and a rod of dehydrated pure silica was collapsed and drawn to fabricate an optical fiber having a core diameter of 5 μm and an outer diameter of 125 μm. The difference of the refractive index between the core and the cladding was 0.5%. The optical fiber had attenuation of light transmission of 0.2 dB/Km at a wavelength of 1.55 μm.

Example 5

A pure quartz soot preform produced by the VAD method was heated in the furnace of Fig. 5 at 900°C to dehydrate it.

Then, the furnace was filled with pure $SiF_4$ at pressure of 0.05 bar and heated from 800°C to 1,600°C at a heating rate of 3.5°C/min. to vitrify the preform. Δn of the glass preform was −0.35%. The water content of the glass preform was less than 0.1 ppm.

Example 6

In the same manner as in Example 4 but changing the pressure of $SiF_4$ as shown in following Table 1, the glass preform was produced. Δn of the produced glass preform is also shown in Table 1

Table 1

| Pressure bar | Δn (%) |
|---|---|
| 0.01 | -0.24 |
| 0.02 | -0.28 |
| 0.03 | -0.30 |
| 0.05 | -0.35 |
| 0.10 | -0.42 |
| 0.40 | -0.60 |
| 0.50 | -0.63 |
| 0.80 | -0.70*1) |

Note: *1) A few bubbles remained in the preform.

Example 7

In the same manner as in Example 5 but changing the pressure of $SiF_4$ as shown in following Table 2, ten glass preforms under each pressure were produced. Δn of the produced glass preform and the presence of bubbles are shown in Table 2.

Table 2

| Pressure bar | Δn (%) | Number of glass preforms with bubbles |
|---|---|---|
| 0.1 | -0.42 | None |
| 0.2 | -0.50 | None |
| 0.3 | -0.55 | None |
| 0.4 | -0.60 | None |
| 0.5 | -0.65 | None |
| 0.6 | -0.66 | 1-3 |
| 0.7 | -0.68 | 1-3 |
| 0.8 | -0.71 | 1-3 |
| 0.9 | -0.73 | 5 |
| 1.0 | -0.75 | Almost all |

Comparative Example 2

In the same manner as in Example 5 but using a mixture of $SiF_4$ and helium under an atmospheric pressure in place of pure $SiF_4$ with partial pressure of $SiF_4$ shown in Table 3, ten glass preform under each pressure were produced. Δn of the produced glass preform and the pressure of bubbles are shown in Table 3.

Table 3

| Pressure bar | Δn (%) | Number of glass preforms with bubbles |
|---|---|---|
| 0.1 | -0.42 | 3-4 |
| 0.2 | -0.50 | 3-4 |
| 0.3 | -0.55 | 3-4 |
| 0.4 | -0.60 | 3-4 |
| 0.5 | -0.65 | 3-4 |
| 0.6 | -0.66 | 7-8 |
| 0.7 | -0.68 | 7-8 |
| 0.8 | -0.71 | 7-8 |
| 0.9 | -0.73 | Almost all |
| 1.0 | -0.75 | Almost all |

Example 8

A soot preform used consisted of a core of high N.A. glass added with Ge in an amount corresponding to Δn of 2% around which silica soot particles were deposited.

The soot preform was heated in the furnace of Fig. 5 at 1,250°C under pressure of 0.5 bar for 1 hour with introducing $SiF_4$ at a rate of 150 ml/min. Then, the preform was heated at 1,700°C under pressure of 0.2 bar in a helium atmosphere to vitrify it. Δn of the produced glass preform was −0.63%. The difference of the refractive index between the core and the cladding of the optical fiber produced from the produced glass preform was about 2.6%.

Example 9

Around a glass rod consisting of a core portion of pure quartz and a peripheral portion of quartz containing fluorine in an amount corresponding to Δn of −0.5% and having a diameter of 10 mm, pure quartz glass particles were deposited to form a soot preform.

The soot preform was heated at 1,200°C in an atmosphere of nitrogen gas containing 2% by mole of chlorine gas by introducing the preform in the furnace of Fig. 5 at a descending rate of 4 mm/min. Then, $SiF_4$ was introduced at a flow rate of 200 ml/min. under pressure of 0.2 bar to vitrify the preform at 1,650°C. The produced glass preform was then drawn to fabricate an optical fiber. The optical fiber had not any absorption due to impurities and sufficiently low attenuation of light transmission of, for example, 0.4 dB/Km at a wavelength of 1.30 μm.

Example 10

Around a glass rod consisting of a core portion of pure quartz and a pure quartz glass added with fluorine in an amount corresponding to Δn of −0.5% and had a diameter of 10 mm, pure quartz glass soot particles were deposited to form a soot preform.

The soot preform was heated at 1,200°C for 30 minutes in an atmosphere of nitrogen gas containing 2% by mole of chlorine gas by introducing the furnace of Fig. 5. Then, $SiF_4$ was introduced at a flow rate of

200 ml/min. under pressure of 0.2 bar to vitrify the preform at 1,650°C. The produced glass preform was then drawn to fabricate an optical fiber. The optical fiber had not any absorption due to impurities and sufficiently low attenuation of light transmission of, for example, 0.4 dB/Km at a wavelength of 1.30 µm.

**Claims**

1. A method for producing a fluorine-containing glass preform for use in the fabrication of an optical fiber wherein a glass soot preform formed from a glass-forming raw material is heated and vitrified, characterized by the following steps:

heating the soot preform under a reduced pressure of $50 \times 1.333$ mbar to $10^{-3} \times 1.333$ mbar (50 Torr to $10^{-3}$ Torr) at a temperature at which the soot preform is not vitrified,

heating the soot preform in an atmosphere comprising at least one fluorine-containing compound having a partial pressure from 0.01 to 0.5 bar at a pressure not lower than atmospheric pressure.

2. A method for producing a fluorine-containing glass preform for use in the fabrication of an optical fiber wherein a glass soot preform formed from a glass-forming raw material is heated and vitrified, characterized by the following steps:

heating the soot preform in an atmosphere comprising at least one fluorine-containing compound having a partial pressure from 0.01 to 0.5 bar at a reduced pressure for a sufficient time to add fluorine thereto, and vitrifying the fluorine added preform.

3. The method according to Claim 1, wherein the fluorine-containing compound is in a gas state.

4. The method according to Claim 1, wherein the fluorine-containing compound is $SiF_4$, $SF_6$, $CF_4$, $C_2F_6$, $C_3F_8$, $CCl_2F_2$, $COF_2$ or mixtures thereof.

5. The method according to Claim 1, wherein the fluorine-containing compound is $SiF_4$.

6. The method according to Claim 1, wherein the fluorine-containing compound is filled in the spaces of the soot preform under a pressure not lower than atmospheric pressure.

7. The method according to Claim 1, wherein the latter heating step of the soot preform is carried out under a reduced pressure.

8. The method according to Claim 1, wherein at least a part of the soot preform has a bulk density of not smaller than 0.4 g/cm$^3$.

9. The method according to Claim 1, wherein the vitrification step is carried out under a reduced pressure.

10. The method according to Claim 2, wherein the latter heating step and the vitrification step are simultaneously caried out.

11. The method according to Claim 1, wherein the soot preform consisting of $SiO_2$ glass soot particles is heated under a reduced pressure of $50 \times 1.333$ mbar to $10^{-3} \times 1.333$ mbar at a temperature at which the soot preform is not vitrified and vitrified under reduced pressure in an atmosphere comprising $SiF_4$ having a partial pressure of 0.01 to 0.5 bar for a sufficient time to add fluorine to the preform.

12. The method according to Claim 11, wherein the heating step and the vitrification step are simultaneously carried out.

13. The method according to Claim 11, which further comprises dehydrating the soot preform before the heating step.

14. The method according to Claim 11, wherein the soot preform consists of a core portion of a pure glass and a peripheral portion of glass soot particles.

**Patentansprüche**

1. Verfahren zum Herstellen einer fluorhaltigen Glasvorform für die Verwendung bei der Herstellung einer optischen Faser, bei dem eine Glasruß-Vorform, die aus einem glasbildenden Rohmaterial gebildet ist, erhitzt und verglast wird, gekennzeichnet durch folgende Stufen:

Erhitzen der Ruß-Vorform unter einem verminderten Druck von $50 \times 1{,}333$ mbar bis $10^{-3} \times 1{,}333$ mbar (50 Torr bis $10^{-3}$ Torr) bei einer Temperatur, bei welcher die Ruß-Vorform nicht verglast wird,

Erhitzen der Ruß-Vorform in einer Atmosphäre, die wenigstens eine Fluorhaltige Verbindung enthält, mit einem Partialdruck von 0,01 bis 0,5 bar bei einem Druck nicht weniger als Atmosphärendruck.

2. Verfahren zur Herstellung einer fluorhaltigen Glas-Vorform für die Verwendung bei der Herstellung einer optischen Faser, bei dem eine Glasruß-Vorform, die aus einem glasbildenden Rohmaterial gebildet ist, erhitzt und verglast wird, gekennzeichnet durch die folgenden Stufen:

Erhitzen der Ruß-Vorform in einer Atmosphäre enthaltend wenigstens eine fluorhaltige Verbindung mit einem Partialdruck von 0,01 bis 0,5 bar unter vermindertem Druck während einer ausreichenden Zeit, um Fluor zuzufügen, und Verglasen der Vorform, der Fluor zugefügt wurde.

3. Verfahren gemäß Anspruch 1, bei dem die fluorhaltige Verbindung in einem Gaszustand ist.

4. Verfahren gemäß Anspruch 1, bei dem die fluorhaltige Verbindung $SiF_4$, $SF_6$, $CF_4$, $C_2F_6$, $C_3F_8$, $CCl_2F_2$, $COF_2$ oder Mischungen daraus sind.

5. Verfahren gemäß Anspruch 1, bei dem die fluorhaltige Verbindung $SiF_4$ ist.

6. Verfahren gemäß Anspruch 1, bei dem die fluorhaltige Verbindung in die Räume der Ruß-Voform unter Atmosphärendruck eingefüllt wird.

7. Verfahren gemäß Anspruch 1, bei dem die spätere Erhitzungsstufe der Ruß-Vorform unter einem verminderten Druck vorgenommen wird.

8. Verfahren gemäß Anspruch 1, bei dem wenigstens ein Teil der Ruß-Vorform eine Schüttdichte von nicht weniger als 0,4 $g/cm^3$ hat.

9. Verfahren gemäß Anspruch 1, bei dem die Verglasungsstufe unter einem verminderten Druck durchgeführt wird.

10. Verfahren gemäß Anspruch 2, bei dem die spätere Erhitzungsstufe und die Verglasungsstufe gleichzeitig durchgeführt werden.

11. Verfahren gemäß Anspruch 1, bei dem die Glas-Vorform bestehend aus $SiO_2$ Glasrußteilchen unter einem verminderten Druck von 50 × 1,333 mbar bis $10^{-3}$ × 1,333 mbar bei einer Temperatur, bei welcher die Ruß-Vorform nicht verglast, erhitzt wird und dann unter vermindertem Druck in einer Atmosphäre, umfassend $SiF_4$, mit einem Partialdruck von 0,01 bis 0,5 bar während einer ausreichenden Zeit, um Fluor zu der Vorform zu addieren, erhitzt wird.

12. Verfahren gemäß Anspruch 11, bei dem die Erhitzungsstufe und die Verglasungsstufe gleichzeitig durchgeführt werden.

13. Verfahren gemäß Anspruch 11, welches weiterhin das Dehydratisieren der Glas-Vorform vor der Erhitzungsstufe umfaßt.

14. Verfahren gemäß Anspruch 11, bei dem die Ruß-Vorform aus einem Kernteil aus einem reinen Glas und einem peripheren Anteil von Glasrußteilchen besteht.

**Revendications**

1. Un procédé de production d'une préforme en verre contenant du fluor à utiliser dans la fabrication d'une fibre optique, selon lequel une préforme en suie de verre formée à partir d'une matière première formant le verre est chauffée et vitrifiée, caractérisé par les étapes suivantes:

chauffage de la préforme en suie sous une pression réduite de 50 × 1,333 mbar à $10^{-3}$ à $10^{-3}$ × 1,333 mbar (50 torr à $10^{-3}$ torr) à une température à laquelle la préforme en suie n'est pas vitrifiée,

chauffage de la préforme en suie dans une atmosphère comprenant au moins un composé contenant du fluor ayant une pression partielle de 0,01 à 0,5 bar à une pression non inférieure à la pression atmosphèrique.

2. Un procédé de production d'une préforme en verre contenant du fluor à utiliser dans la fabrication d'une fibre optique selon lequel une préforme en suie de verre formée à partir d'une matière formant le verre est chauffée et vitrifiée, caractérisé par les étapes suivantes:

chauffage de la préforme en suie dans une atmosphère comprenant au moins un composé contenant du fluor ayant une pression partielle de 0,01 à 0,5 bar à une pression réduite pendant un temps suffisant pour lui additionner du fluor, et vitrification de la préforme additionnée de fluor.

3. Le procédé selon la revendication 1, selon lequel le composé contenant du fluor est à l'état gazeux.

4. Le procédé selon la revendication 1, selon lequel le composé contenant du fluor est du $SiF_4$, $SF_6$, $CF_4$, $C_2F_6$, $C_3F_8$, $CCl_2F_2$, $COF_2$ ou un mélange de ceux-ci.

5. Le procédé selon la revendication 1, selon lequel le composé contenant du fluor est due $SiF_4$.

6. Le procédé selon la revendication 1, selon lequel le composé contenant du fluor est rempli dans les espaces de la préforme en suie sous une pression non inférieure à la pression atmosphérique.

7. Le procédé selon la revendication 1, selon lequel la dernière étape de chauffage de la préforme en suie est conduite sous une pression réduite.

8. Le procédé selon la revendication 1, selon lequel au moins une partie de la préforme en suie a une masse volumique apparente non inférieure à 0,4 $g/cm^3$.

9. Le procédé selon la revendication 1, selon lequel l'étape de vitrification est conduite sous une pression réduite.

10. Le procédé selon la revendication 2, selon lequel la dernière étape de chauffage et l'étape de vitrification sont conduites simultanément.

11. Le procédé selon la revendication 1, selon lequel la préforme en suie constituée de particules de suie de verre de $SiO_2$ est chauffée sous une pression réduite de 50 × 1,333 mbar à $10^{-3}$ × 1,333 mbar à une température à laquelle la préforme en suie n'est pas vitrifiée, et elle est vitrifiée sous une pression réduite dans une atmosphère comprenant du $SiF_4$ ayant une pression partielle de 0,01 à 0,5 bar pendant un temps suffisant pour additionner du fluor à la préforme.

12. Le procédé selon la revendication 11, selon lequel l'étape de chauffage et l'étape de vitrification sont conduites simultanément.

13. Le procédé selon la revendication 11, qui comprend en outre le déshydratation de la préforme en suie avant l'étape de chauffage.

14. Le procédé selon la revendication 11, selon lequel la préforme en suie est constituée d'une portion de coeur en un verre pur et d'une portion périphérique en particules de suie de verre.

*Fig. 1*

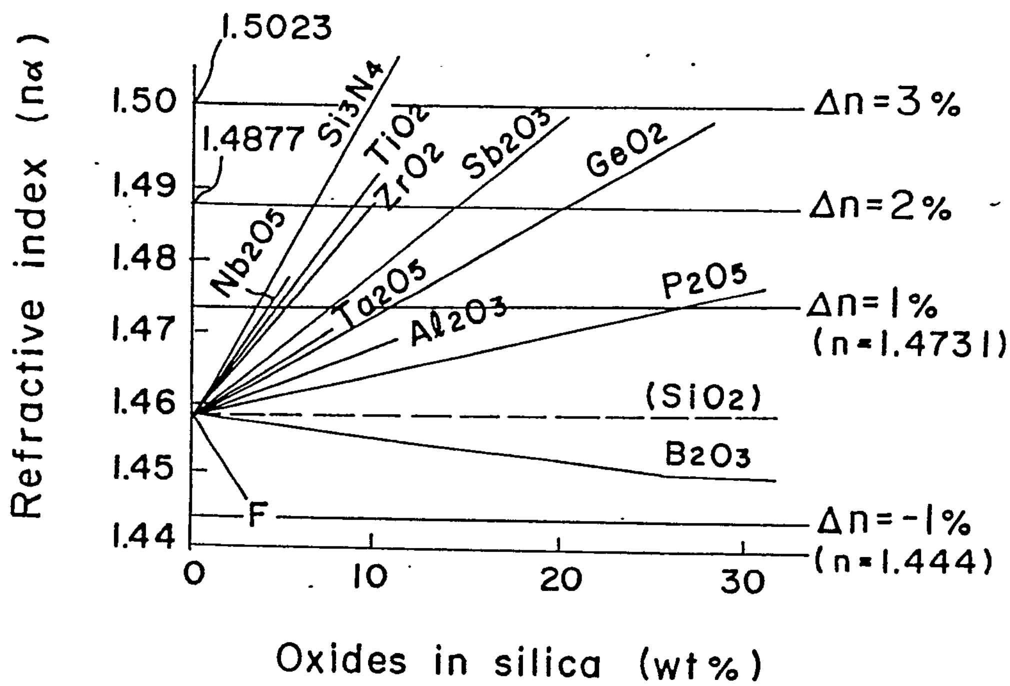
Refractive index (nα)
1.5023
1.50
1.4877
1.49
1.48
1.47
1.46
1.45
1.44
Si3N4
TiO2
ZrO2
Sb2O3
GeO2
Nb2O5
Ta2O5
Al2O3
P2O5
(SiO2)
B2O3
F
Δn=3%
Δn=2%
Δn=1%
(n=1.4731)
Δn=-1%
(n=1.444)
0
10
20
30
Oxides in silica (wt%)

*Fig. 2*

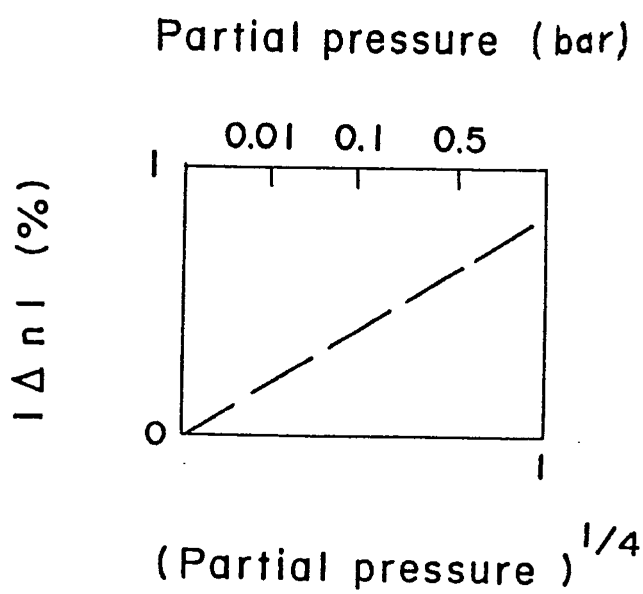
Partial pressure (bar)
0.01
0.1
0.5
1
0
1
|Δn| (%)
(Partial pressure)^1/4

*Fig. 3*

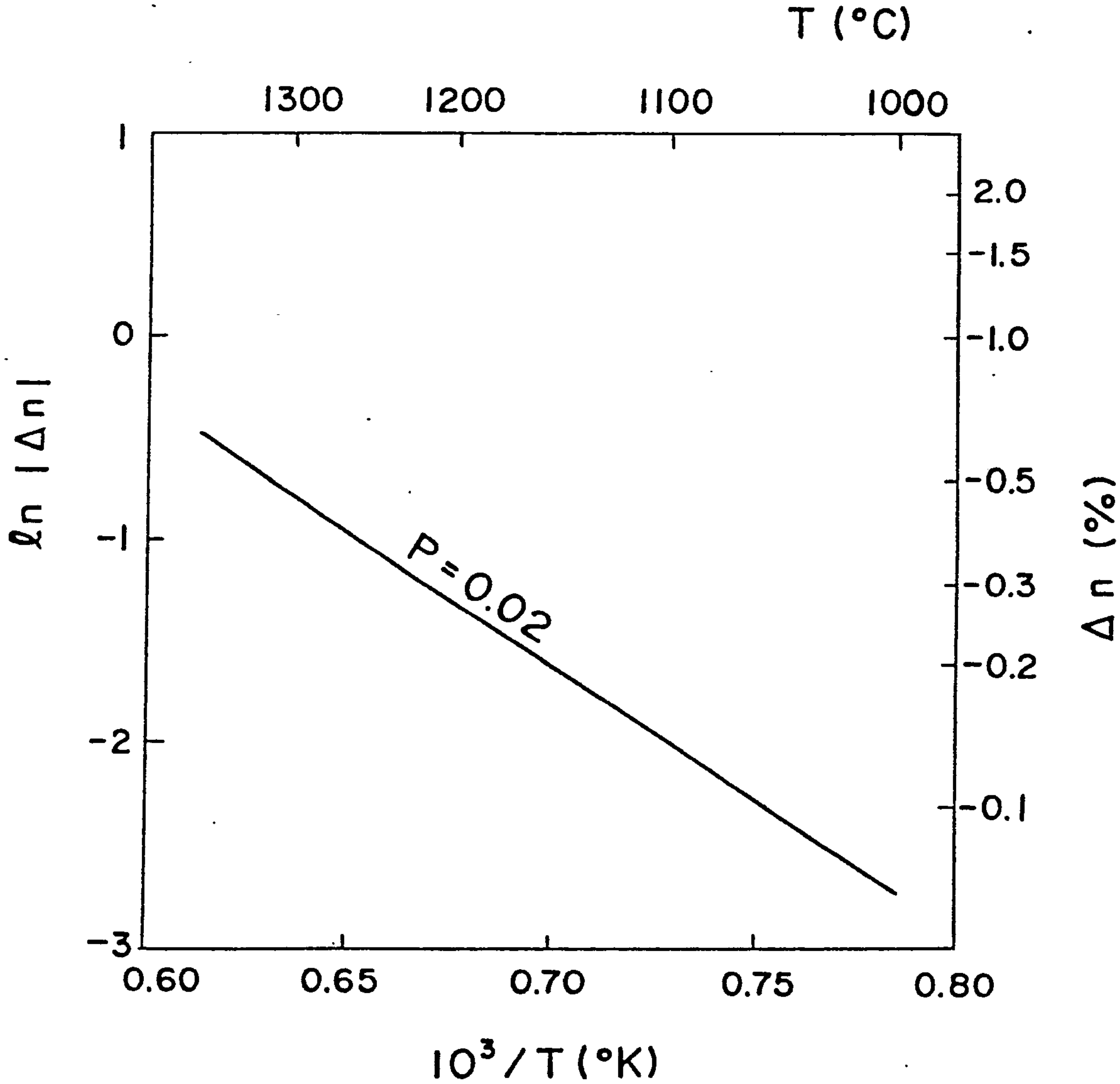
T (°C)
1300
1200
1100
1000
1
0
-1
-2
-3
ℓn |Δn|
2.0
-1.5
-1.0
-0.5
-0.3
-0.2
-0.1
Δn (%)
P=0.02
0.60
0.65
0.70
0.75
0.80
$10^3$ / T (°K)

Fig. 4

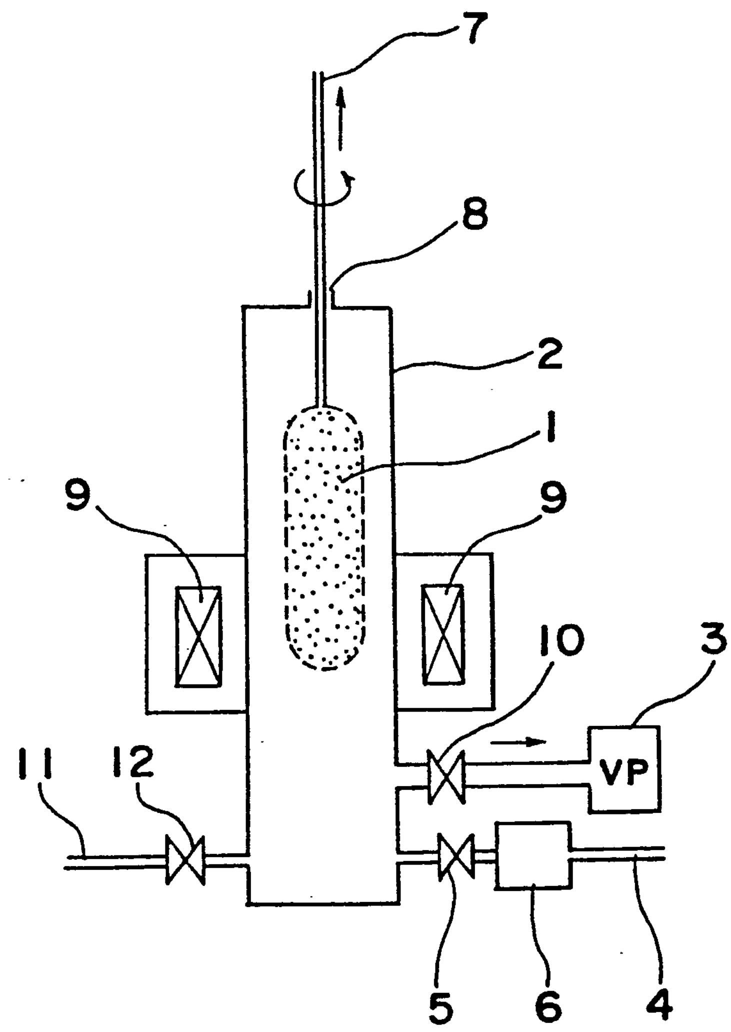

*Fig. 5*